# EUROPÄISCHE PATENTSCHRIFT

(11) **EP 1 106 871 B1**
(45) Veröffentlichungstag und Bekanntmachung des Hinweises auf die Patenterteilung: **31.08.2005**
(21) Anmeldenummer: 00126035.5
(22) Anmeldetag: 29.11.2000
(51) Int. Cl.: F16H 61/02

(54) **Elektronische Steuervorrichtung für ein selbsttätig schaltendes Getriebe**
Electronic control device for automatic transmission
Unité de commande électronique pour une transmission automatique

(30) Priorität: 11.12.1999 DE 19959891
(43) Veröffentlichungstag der Anmeldung: 13.06.2001
(73) Patentinhaber: ADAM OPEL AG, 65423 Rüsselsheim (DE)
(72) Erfinder: Kleila, Hans, Dipl.-Ing. (FH), 65428 Rüsselsheim (DE)
(74) Vertreter: Daniel, Ulrich W.P.

(56) Entgegenhaltungen:
- DE-A- 19 733 464
- PATENT ABSTRACTS OF JAPAN vol. 1999, no. 09, 30. Juli 1999 (1999-07-30) & JP 11 107801 A (AISIN AW CO LTD;AQUEOUS RESERCH:KK), 20. April 1999 (1999-04-20)

## Beschreibung

Die Erfindung betrifft eine elektronische Steuervorrichtung für ein selbsttätig schaltendes Getriebe gemäß dem Oberbegriff des Patentanspruches 1.

Eine derartige Steuervorrichtung ist z. B. mit EP 0 531 567 B1 beschrieben. Bei dieser bekannten Steuervorrichtung werden durch Auswerten der Fahrzeuggeschwindigkeit oder der Getriebeabtriebsdrehzahl unter Berücksichtigung der Zeitabhängigkeit der aktuelle Beladungszustand sowie die sich unterschiedlich einstellenden Fahrwiderstände ermittelt und ein diese Zustände repräsentierendes Signal generiert. Aufgrund des so ermittelten Signals werden die für den aktuellen Fahrzustand passenden Schaltkennlinien oder Schaltpunkte des Getriebes angepasst.

Es hat sich jedoch herausgestellt, dass durch Verändern der Fahrzeugbereifung, z. B. durch Umrüstung des Fahrzeuges auf eine andere Reifengröße oder eine andere Reifenbauart, die sogenannte Road-Load, d. h. der reale Fahrwiderstand und seine Charakteristik verändert werden. Die bekannten elektronischen Steuervorrichtungen der gattungsgemäßen Art sind auf eine bestimmte Bereifung des Fahrzeuges angepasst. Nach einem Reifenwechsel auf eine andere Reifenart oder Reifengröße können sich Nachteile im Schaltverhalten des Getriebes einstellen, z. B. in Form eines als Hunting-Effekt bekannten Pendelschaltens bei bestimmten Fahrzuständen.

Aufgabe der Erfindung ist es, diesen bei Benutzung veränderter Reifengrößen bzw. Reifenbauarten auftretenden negativen Effekt auf die Anpassung der Schaltkennlinien zu vermeiden.

Die Erfindung löst diese Aufgabe mit den Merkmalen des Patentanspruches 1. Die Unteransprüche haben vorteilhafte Weiterbildungen der Erfindung zum Gegenstand.

Indem für die Auswahl und Anpassung der aktuell zu benutzenden Schaltkennlinie für das Wechseln der Gänge auch die am Kraftfahrzeug verwendete Reifengröße bzw. Reifenbauart Berücksichtigung findet, berücksichtigt die aktuelle Schaltkennlinie die von der Bereifung herrührende Veränderung der Road-Load und negative Einflüsse auf das Schaltverhalten werden somit eliminiert.

Da bei einem Kraftfahrzeug bestimmter Bauart nur eine begrenzte Anzahl von Reifengrößen und Reifenarten zur Benutzung zugelassen sind, kann in der Steuervorrichtung des Getriebes für jeden dieser zugelassenen Reifen ein Kennfeldspeicher vorgesehen sein, auf welches die Steuervorrichtung bei der Auswahl bzw. Generierung der aktuell anzuwendenden Schaltkennlinie neben den anderen an sich bekannten Variablen zurückgreift. Das Erkennen der aktuell verwendeten Reifengröße bzw. Reifenbauart erfolgt durch Vergleich von Drehzahl und Fahrzeugweg am langsam rollenden Fahrzeug.

Ein-Ausführungsbeispiel der Erfindung ist nachstehend näher beschrieben.

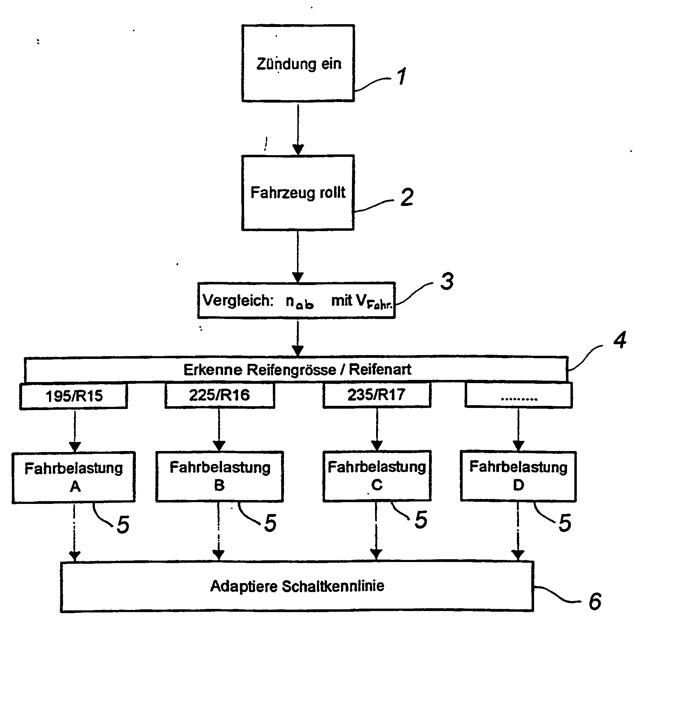

Die einzige Figur zeigt ein Flussdiagramm, welches die Arbeitsweise der Steuervorrichtung verdeutlicht.

Unter der Bedingung, dass die Zündung des Antriebsmotors eingeschaltet ist - Block 1 - und das Fahrzeug rollt - Block 2 -, wird gemäß Block 3 die Abtriebsdrehzahl n_{ab} mit der realen Geschwindigkeit des Fahrzeuges V_{Fahrz}. verglichen und daraus gemäß Block 4 auf die am Fahrzeug verwendete Reifengröße geschlossen. Im vorliegenden Beispiel sind drei verschiedene Reifengrößen, nämlich 195/R15, 225/R16, 235/R17 konkret angegeben. Selbstverständlich können auch mehr als drei verschiedene Reifengrößen bzw. Reifenbauarten für ein bestimmtes Fahrzeug zugelassen und somit in der Steuervorrichtung berücksichtigt sein.

Für jede dieser Reifengrößen bzw. Reifenbauarten ist jeweils ein Kennfeldspeicher 5 vorgesehen, welcher die spezifische Fahrbelastung (Road-Load) dieses Reifens berücksichtigt. Die in diesem Kennfeldspeicher 5 enthaltenen Werte sind in Versuchsreihen ermittelt.

Den Kennfeldspeicher 5, welcher der bei Block 4 erkannten Reifengröße bzw. Reifenbauart entspricht, wird von der Steuervorrichtung gemäß Block 6 zur Wahl der Schaltkennlinie adaptiert.

## Patentansprüche

1. Elektronische Steuerungsvorrichtung für ein selbsttätig schaltendes Getriebe eines Kraftfahrzeuges, bei der Schaltkennlinien in einem Kennfeldspeicher abgelegt sind und in Abhängigkeit von einer anhaltenden Änderung des Fahrwiderstandes verschiebbar bzw. veränderbar sind, **dadurch gekennzeichnet, dass** in der elektronischen Steuerungsvorrichtung Mittel vorgesehen sind, die durch einen Vergleich der Drehzahl und Fahrzeugweg am langsam rollenden Fahrzeug das Erkennen der aktuell verwendeten Reifengröße bzw. Reifenbauart ermöglicht, und dass als eine Variable zur Adaption der Schaltkennlinien die am Kraftfahrzeug verwendete Reifengröße bzw. Reifenbauart als Auswahl aus den verwendbaren Reifengrößen bzw. Reifenbauarten dient.

2. Elektronische Steuervorrichtung nach Anspruch 1, **dadurch gekennzeichnet, dass** die verwendbaren Reifengrößen bzw. Reifenbauarten in der Steuervorrichtung gespeichert sind, die aktuell am Kraftfahrzeug verwendete Reifengröße bzw. Reifenbauart vom Steuergerät erkannt wird und danach auf die dieser Reifengröße bzw. Reifenbauart angepassten Schaltkennlinien bei der Adaption der aktuellen Schaltkennlinie zurückgegriffen wird.

3. Elektronische Steuervorrichtung nach Anspruch 1 oder 2, **dadurch gekennzeichnet, dass** für jede verwendbare Reifengröße bzw. Reifenbauart in der Steuervorrichtung ein spezifischer Kennfeldspeicher vorgesehen ist.

## Claims

1. Electronic control device for an automatic transmission of a motor vehicle, in which device shift characteristic curves are filed in a characteristic map memory and can be shifted or varied in dependence upon a sustained change of the driving resistance, **characterized in that** in the electronic control device means are provided, which by means of a comparison of the rotational speed and vehicle displacement of the slowly moving vehicle make it possible to identify the tyre size and/or tyre design actually in use, and that the tyre size and/or tyre design used on the vehicle, as a selection from the usable tyre sizes and/or tyre designs, is used as a variable for the adaptation of the shift characteristic curves.

2. Electronic control device according to claim 1, **characterized in that** the usable tyre sizes and/or tyre designs are stored in the control device, the tyre size and/or tyre design actually in use on the vehicle is identified by the control device and then there is resort to shift characteristic curves, which are adapted to said tyre size and/or tyre design, for adaptation of the actual shift characteristic curve.

3. Electronic control device according to claim 1 or 2, **characterized in that** for each usable tyre size and/or tyre design a specific characteristic map memory is provided in the control device.

## Revendications

1. Dispositif de commande électronique pour une transmission à commutation automatique d'un véhicule automobile, dans lequel les lignes caractéristiques de commutation sont disposées dans une mémoire de champ de caractéristiques et sont susceptibles d'être déplacées ou modifiées en fonction d'une modification permanente de la résistance à l'avancement (du véhicule), **caractérisé en ce que**, dans le dispositif de commande électronique, sont prévus des moyens qui, par une comparaison de la vitesse de rotation et du parcours du véhicule sur le véhicule roulant lentement, permettent de reconnaître la taille ou le type de bandage pneumatique actuellement utilisé et **en ce que**, comme variable pour l'adaptation des lignes caractéristiques de commutation, la taille ou le type du bandage pneumatique utilisé sur le véhicule sert de sélection à partir des tailles ou des types de bandages pneumatiques susceptibles d'être utilisés.

2. Dispositif de commande électronique selon la revendication 1, **caractérisé en ce que** les tailles ou les types de bandages pneumatiques susceptibles d'être utilisés sont mis en mémoire dans le dispositif de commande, **en ce que** la taille du bandage pneumatique utilisé actuellement sur le véhicule automobile est reproduit par l'appareil de commande et ensuite est repris sur les lignes caractéristiques de commutation adaptées à cette taille ou à ce type de bandage pneumatique au cours de l'adaptation des lignes caractéristiques actuelles de commutation.

3. Dispositif de commande électronique selon la revendication 1 ou 2, **caractérisé en ce que**, pour chaque taille ou type de bandage pneumatique susceptible d'être utilisé, est prévu dans le dispositif de commande une mémoire spécifique de champs de caractéristiques.
